(19) Europäisches Patentamt
European Patent Office
Office européen des brevets

(11) Publication number: **0 138 465 A2**

# (12) EUROPEAN PATENT APPLICATION

(21) Application number: **84306576.4**

(22) Date of filing: **27.09.84**

(51) Int. Cl.[4]: **C 08 G 59/18**, C 08 G 59/42, C 08 G 59/40, C 08 G 59/64, C 08 G 59/50, C 08 G 59/58, C 08 G 59/66

(30) Priority: **30.09.83 JP 182528/83**

(43) Date of publication of application: **24.04.85 Bulletin 85/17**

(84) Designated Contracting States: **DE FR GB**

(71) Applicant: **AJINOMOTO CO., INC., 5-8, Kyobashi 1-chome, Chuo-ku, Tokyo 104 (JP)**

(72) Inventor: **Hirose, Takeshi, No. 2-20-8, Kannon-cho Kawasaki-ku, Kawasaki-shi Kanagawa-ken (JP)**
Inventor: **Ito, Nobuo, No. 26 4-5 Ikusawa Oisomachi, Naka-gun Kanagawa-ken (JP)**
Inventor: **Hirai, Kiyomiki, No. 1115-2 Nakamaruko Nakahara-ku, Kawasaki-shi Kanagawa-ken (JP)**
Inventor: **Takeuchi, Koji, No. 806-40, Kamisirane-cho Asahi-ku, Yokohama-shi Kanagawa-ken (JP)**

(74) Representative: **Bond, Bentley George et al, HASELTINE LAKE & CO. Hazlitt House 28 Southampton Buildings Chancery Lane, London, WC2A 1AT (GB)**

## (54) Latent curing agents for epoxy resins.

(57) An addition product obtained by reacting (a) a polyfunctional epoxy compound, (b) a compound having at least one functional group of OH group, $NH_2$ group, NH group and SH group together with a tertiary amino group in the molecule and (c) a carboxylic acid anhydride are good curing agents for epoxy resin. The curing agents are useful in formulating novel storable one-package, heat-curable epoxy resin-based compositions.

EP 0 138 465 A2

LATENT CURING AGENTS FOR EPOXY RESINS

The present invention relates to a latent curing agent for epoxy resins. More particularly, it relates to a latent curing agent for epoxy resins which causes rapid curing at moderate elevated temperature, and which gives epoxy resin composition having excellent storage stability at room temperature.

One-pack type epoxy resins are preferable to the conventional two-pack type ones because the former are free of misformulation and can be used continuously. One-pack type epoxy resins require a so-called latent curing agent which does not react with epoxy compounds at room temperature, but on heating, reacts with epoxy compounds to effect curing.

Heretofore, several latent curing agents have been proposed. Representative examples are boron trifluoride-amine adduct, dicyandiamide, and dibasic acid dihydrazide. The first one is hard to treat owing to its high hygroscopic property, and it affects adversely the physical properties of the cured resin. The latter two are useful in formulating epoxy resin compositions having excellent storage stability but full curing by means of these compound could be achieved only by heating at higher temperature than 150°C for a long time. To save energy and not to damage surrounding components, rapid curing at a low temperature is required.

It is known that an amine type curing agent can be improved in workability by converting it into an adduct

with an epoxy resin. It has recently been disclosed that an adduct obtained by the reaction of an imidazole compound with an epoxy compound is a comparatively good latent curing agent (See U.S. Patent No. 4,066,625.) For example, an adduct obtained by the reaction of 2-ethyl-4-methylimidazole with Epon 834 (bisphenol A type epoxy resin; a product of Shell Chemical Co., epoxy equivalent 230∿270) has a softening temperature of 100 to 125°C. But as, in general, a formulated resin having good reactivity is poor in storage stability, or having good storage stability is poor in reactivity, the range of good reaction ratio is very narrow. Epoxy resin composition incorporating an adduct obtained by the reaction of 1 equivalent of epoxy group in Epon 834 for 1 equivalent of secondary amino group of 2-ethyl-4-methylimidazole is cured at 100°C for thirty minutes, but is poor in storage stability (4 days at 35°C, 2 days at 40°C). Epoxy resin composition incorporating an adduct obtained by the reaction of 2 equivalent of Epon 834 for 1 equivalent of 2-ethyl-4-methylimidazole has good storage stability (> 14 days at 35°C) but is poor in reactivity. These adducts perform curing at a low temperature when they are used with other curing agents, so they are superior to an adduct of aliphatic amine with an epoxy compound as latent curing agents, but they are insufficient as latent curing agents which perform curing at 100 ∿ 130°C and are superior in storage stability.

It is known that an adduct obtained by the

reaction of N-methylpiperazine with an epoxy compound can be used as a latent curing agent (See U.S. Patent No. 4,268,656). But, this adduct alone cannot be effective as a latent curing agent, but only when used with another curing agent.

In short, an adduct of an aliphatic amine and an epoxy compound cannot improve the storage stability very much. In the case of specific amine compound, an adduct of the two compounds, an amine compound and an epoxy compound, which satisfy both the reactivity and storage stability as a latent curing agent for one-pack type epoxy resin is rare.

We have carried out a series of researches in order to develop a latent curing agent which performs curing at a low temperature and is superior in storage stability. As the result, it has been found that it is possible to obtain a latent curing agent which is superior to the above-mentioned adduct of an amine type curing agent and an epoxy compound. Such a latent curing agent is an adduct obtained by reacting a compound having active hydrogen together with a tertiary amino group in the molecule, an epoxy compound and a carboxylic acid anhydride.

In other words, the addition of the third compound, carboxylic acid anhydride, improves the storage stability without impairing the reactivity. It is possible to obtain a latent curing agent which performs curing at a low temperture and is superior in storage stability. And, by the addition of a carboxylic acid anhydride, it

is possible to show the superiority as a latent curing over the wide range of the reaction ratio of an amine compound to an epoxy compound.

The active hydrogen of the compound having a tertiary amino group is not only $-NH_2$ group and -NH group but also -OH group and SH group.

That is, it has been found that an addition product obtained by reacting (a) a polyfunctional epoxy compound, (b) a compound having at least one functional group of -OH group, $-NH_2$ group, -NH group and -SH group together with a tertiary amino group in the molecule and (c) a carboxylic acid anhydride is the latent curing agent that meets the object of this invention.

A detailed description will be given in the following with respect to the latent curing agent of this invention.

The polyfunctional epoxy compound as a raw material of the latent curing agent of this invention may be any compound having two or more epoxy groups in the molecule. It includes, for example, polyglycidyl ether obtained by reacting a polyhydric phenol (such as bisphenol A, bisphenol F, catechol, resorcinol) or a polyhydric alcohol (such as glycerin and polyethylene glycol) with epichlorohydrin; glycidyl ether ester obtained by reacting a hydroxycarboxylic acid (such as hydroxybenzoic acid and β-hydroxynaphthoic acid) with epichlorohydrin; polyglycidyl ester obtained from a polycarboxylic acid such as

terephthalic acid; glycidylamine compound obtained from 4,4'-diaminodiphenylmethane and m-aminophenol; and epoxidized novolak and epoxidized polyolefin.

The compound having at least one functional group of OH group, $NH_2$ group, NH group and SH group together with a tertiary amino group in the molecule, which is reacted with the above-mentioned polyfunctional epoxy compound, may be represented by the following formula:

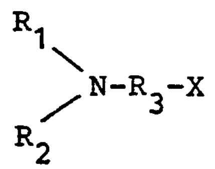

(1)

where X is -OH group, $-NH_2$ group, -NH group, or -SH group; $R_1$ and $R_2$ are $C_{1-20}$ alkyl groups, $C_{2-20}$ alkenyl groups, and aromatic hydrocarbon groups such as phenyl group and benzyl group, with or without substituent such as oxygen, halogen, and functional group as represented by X mentioned above; and $R_3$ is a divalent residue of $R_1$ or $R_2$. $R_1$ and $R_2$ may connect with each other to form a ring, or $R_1$, $R_2$ and $R_3$ may connect with one another to form a ring. The compounds with tertiary amino groups contained in the heterocyclic ring as represented by the following formula (2) are also effective:

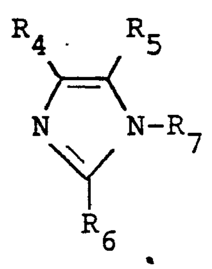

(2)

where $R_4$, $R_5$, $R_6$ and $R_7$ are hydrogen atoms, the groups

defined by $R_1$ and $R_2$, or the functional groups defined by X in the above; and $R_7$ is a hydrogen atom or at least one of $R_4$, $R_5$, $R_6$, and $R_7$ contains the functional group represented by X.

The representative examples of the compound having at least one functional group of -OH, $-NH_2$, -NH and -SH together with a tertiary amino group are listed below:

2-Dimethylaminoethanol, 1-methyl-2-dimethylaminoethanol, 1-phenoxymethyl-2-dimethylaminoethanol, 2-diethylaminoethanol, 1-butoxymethyl-2-dimethylaminoethanol, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimidazole, 1-(2-hydroxy-3-butoxypropyl)-2-ethyl-4-methylimidazole, 1-(2-hydroxy-3-phenoxypropyl)-2-phenylimidazoline, 1-(2-hydroxy-3-butoxypropyl)-2-methylimidazoline, 2-(dimethylaminomethyl)phenol, 2,4,6-tris(dimethylaminomethyl)phenol, N-β-hydroxyethyl morpholine, 2-dimethylaminoethylamine, 3-dimethylamino-n-propylamine, 2-diethylaminoethylamine, 3-diethylamino-n-propylamine, N-methylpiperazine, imidazole, 2-methylimidazole, 2-ethylimidazole, 2-ethyl-4-methylimidazole, 2-isopropylimidazole, 2-undecylimidazole, 2-octadecylimidazole, 2-phenylimidazole, 2-phenyl-4-methylimidazole, 2-dimethylaminoethanethiol, methimazole, 2-mercaptobenzoimidazole, 2-mercaptobenzothiazole and the like.

The examples of the carboxylic acid anhydride

are listed below:

Succinic anhydride, phthalic anhydride, tetrahydro phthalic anhydride, methyl tetrahydro phthalic anhydride, hexahydro phthalic anhydride, methyl hexahydro phthalic anhydride, methyl nadic anhydride, dodecenylsuccinic anhydride, pyromellitic dianhydride, 5-(2,5-diketo-tetrahydrofuryl)-3-methyl-3-cyclohexene-1,2-dicarboxylic anhydride and the like.

To produce an addition compound which is the latent curing agent of this invention, components (a), (b) and (c) are reacted in a ratio of 0.4 ∿ 2 equivalent, preferably 0.5 ∿ 1.5 equivalent of active hydrogen in component (b) and 0.25 ∿ 2.5 equivalent, preferably 0.7 ∿ 2.0 equivalent of component (c), carboxylic acid anhydride, for 1 equivalent of epoxy group in component (a).

If the equivalent number of component (b) is less than 0.4 equivalent for 1 equivalent of epoxy group in component (a), epoxy resins incorporated with such an addition product is slow in curing.

If the equivalent number of component (b) is more than 2 equivalent for 1 equivalent of epoxy group in component (a), the resulting addition product has a low softening point and cannot be readily crushed. Epoxy resins incorporated with such an addition product is poor in storage stability.

If the equivalent number of component (c) is less than 0.25 equivalent for 1 equivalent of epoxy group in

component (a), the effect of component (c) cannot appear.

If the equivalent number of component (c) is more than 2.5 equivalent for 1 equivalent of epoxy group, the addition product has a low softening point and epoxy resins incorporated with such a product is poor in storage stability.

Two or more compounds may be mixed for each of components (a), (b), and (c), so long as they are used in quantities as specified above.

The latent curing agent of this invention can be easily obtained by thoroughly mixing components (a), (b), and (c), gelling them at room temperature or at an elevated temperature, reacting at 80 to 150°C, cooling, solidifying, and crushing. It can also be prepared by performing addition reaction in a solvent such as tetrahydrofuran, dioxane, and methyl ethyl ketone, removing the solvent, and crushing the solid.

The latent curing agent of this invention can be used in combination with a known curing agent such as acid anhydride, dicyandiamide, dibasic acid hydrazide, guanamine, and melamine. The latent curing agent of this invention can be applied to a variety of known epoxy resins having two or more epoxy groups in one molecule. The latent curing agent of this invention should be used in an amount of 0.5 to 40 parts by weight for 100 parts by weight of epoxy resin. If the quantity is less than 0.5 part by weight, satisfactory curing performance is not attained;

and using more than 40 parts by weight impairs the performance of the cured product.

The representative examples of epoxy resins to be cured by the latent curing agent of the invention are those based on glycidyl ethers of polyhydric phenols such as 2,2-bis(4-hydroxyphenyl)-propane (Bisphenol A), resorcinol, hydroquinone, pyrocatechol, saligenin, Bisphenol F and phenolformamide resin.

If necessary, other curing agents, cure accelerator and fillers may be employed in combination with the curing agent of the present invention.

The following examples illustrate the preparation of the latent curing agents and their use as a curing agent for epoxy resin. The abbreviations of the raw materials employed in the examples are as follows.

(a) Polyfunctional epoxide

Epon 828 (a product of Shell Chemical Co.)

Bisphenol A type epoxy resin

epoxy equivalent 184 ∿ 194

Epon 1001 (a product of Shell Chemical Co.)

Bisphenol A type epoxy resin

epoxy equivalent 450 ∿ 500

Epon 807 (a product of Shell Chemical Co.)

Bisphenol F type epoxy resin

epoxy equivalent 166 ∿ 175

Epon 834 (a product of Shell Chemical Co.)

Bisphenol A type epoxy resin

epoxy equivalent 230 ∿ 270

(b) Organic compounds having at least one functional group selected from OH group, $NH_2$ group, NH group and SH group together with a tertiary amino group in the molecule

| | |
|---|---|
| DMAE | 2-Dimethylaminoethanol |
| PG-MZ | 1-(2-Hydroxy-3-phenoxypropyl)-2-methylimidazole |
| DMP-30 | 2,4,6-Tris(dimethylaminomethyl)phenol |
| DMP-10 | 2-(Dimethylaminomethyl)phenol |
| DMAPA | 3-Dimethylamino-n-propylamine |
| MZ | 2-Methylimidazole |
| EMZ | 2-Ethyl-4-methylimidazole |
| SMZ | Methimazole |

(c) Carboxylic acid anhydride

| | |
|---|---|
| PA | Phthalic anhydride |
| MTHPA | Methyl tetrahydro phthalic anhydride |
| MHHPA | Methyl hexahydro phthalic anhydride |
| DDSA | Dodecenylsuccinic anhydride |
| EXPA | 5-(2,5-diketotetrahydrofuryl)-3-methyl-3-cyclohexene-1,2-dicarboxylic anhydride |

Example 1

Preparation of addition product of Epon 828, DMAE and MHHPA

38 Gram (0.2 equivalent) of Epon 828 were sufficiently mixed with 8.4 g (0.5 equivalent) of MHHPA

at room temperature, and to the mixture was added 8.9 g (0.1 equivalent) of DMAE. The temperature was raised gradually under stirring. When the viscosity started to increase, the temperature was maintained at 80°C for thirty minutes, and further maintained at 100°C for an hour. The reaction mixture was cooled to room temperature whereby brown-red solid was obtained. This product was ground to a powder and is referred to as sample No. 2.

Example 2

Preparation of addition product of Epon 828, EMZ and PA

15 Gram (0.1 equivalent) of PA and 10 g of methyl ethyl ketone as solvent were mixed. The mixture was heated at 60°C, and there were added 11 g (0.1 equivalent) of EMZ. The mixture was stirred to a slurry, there were added 19 g (0.1 equivalent) Epon 828, and the temperature was raised gradually under stirring. When the reaction started at approximately 80°C, heating was stopped. After stirring the mixture to be viscous, it was heated at 100°C for an hour, and heated at 120°C under reduced pressure to remove methyl ethyl ketone. The reaction mixture was cooled to room temperature whereby pale yellowish solid was obtained. This product was ground to a powder, and is referred to as sample No. 15.

The sample No. and softening temperature of other addition products prepared by similar manner as in Examples 1 and 2 are shown in Table 1.

Example 3

Reactivity, storage stability and glass transition temperature of the formulated epoxy resin composition were evaluated.

Formulation

| | |
|---|---|
| Epon 828 | 100 parts by weight |
| Latent curing agent of the present invention | 20 |
| ZnO | 5 |

1. Evaluation of the reactivity

1) Onset temperature (Ti) and peak temperature (Tp) were measured by differential thermal analysis (DTA)

Sample weight : about 10 mg

Standard material: $\alpha$-$Al_2O_3$

Heating rate : 5°C/min.

2) The sample was put into a Geer's oven maintained to the prescribed temperature and the resulted cured resin was observed as to its appearance.

2. Storage stability

The sample was put into a Geer's oven set to 30°C and the day required for the sample to become non-fluid was measured.

3. Glass transition temperature (T.g.)

T.g. of the cured resin was measured with a thermal mechanical analysis apparatus (TMA, a product of Rigaku Corporation) by TMA penetration method.

Raising rate of temperature: 10°C/min.

Load : 10 g

Diameter of needle : 1 mm

The results obtained are summarized in Table 2.

Furthermore, a series of adducts obtained by the reaction of Epon 834 as component (a), EMZ as component (b) and MHHPA as component (c) was evaluated varying the reaction ratio of components (b) and (c) to component (a). Softening temperature of the adduct, reactivity, storage stability and glass transition temperature of the formulated epoxy resin composition were evaluated. The results obtained are summarized in Table 3. And, adducts of the two compounds, amine compounds and epoxy compounds, were evaluated as latent curing agent for comparison. The results are summarized in Table 4.

As shown in Table 2, the addition product of the present invention is superior latent curing agent because it showed greatly improved storage stability in comparison with compound having an active hydrogen atom and tertiary amino group (control) alone. Further, as shown in Table 3 and Table 4, the addition product of the present invention is superior latent curing agent because it showed improved storage stability in comparison with the adduct of the two of an amine compound and an epoxy compound, and it is possible to obtain a superior latent curing agent over the wide range of reaction ratio of amine compound.

Example 4

Reactivity and storage stability of the

combination system of the latent curing agent of the present invention and dibasic acid hydrazide were estimated.

The formulation is shown below and the results are shown in Table 4.

Formulation

| | |
|---|---|
| Epon 828 | 100 parts by weight |
| Latent curing agent of the present invention | 20 |
| Adipic dihydrazide | 8 |
| ZnO | 5 |

It will be understood from the comparison of Table 2 with Table 4 that the latent curing agent of the present invention exerts synergistic effect in reactivity in combination with adipic dihydrazide.

Example 5

The storage stability and curing of the combination system of the latent curing agent of the present invention and the known latent curing agent were estimated. The formulation and the result are shown in Table 6.

As shown in Table 6, the epoxy system containing the known latent curing agent above did not entirely cure at 120°C for 1 hour. However, the combination system of the latent curing agent and the known latent curing agent caused complete curing at 120°C for 1 hour.

Example 6

The reactivity and the storage stability of the combination system of the latent curing agent and acid

anhydride were estimated. The formulation is shown below and the results are shown in Table 7.

Formulation

| | |
|---|---|
| Epon 828 | 100 parts by weight |
| MHHPA | 85 |
| Latent curing agent of the present invention | 5 |

As shown in Table 7, the addition product of the present invention is superior latent curing accelerator because it showed greatly improved storage stability and similar reactivity in comparison with amine type accelerator.

TABLE 1

| Sample No. | (a) Component (Number of equivalents) | (b) Component (Number of equivalents) | (c) Component (Number of equivalents | Softening Temperature (°C) |
|---|---|---|---|---|
| 1 | Epon 828 (1) | DMAE (0.5) | PA (0.25) | 120 |
| 2 | Epon 828 (1) | DMAE (0.5) | MHHPA (0.25) | 90 |
| 3 | Epon 828 (1) | DMAE (0.5) | EXPA (0.25) | 130 |
| 4 | Epon 1001 (1) | PG-MZ (1) | DDSA (1) | 90 |
| 5 | Epon 828 (1) | DMP-30 (0.5) | MHHPA (0.25) | 110 |
| 6 | Epon 828 (1) | DMP-10 (0.5) | MHHPA (0.25) | 110 |
| 7 | Epon 807 (1) | DMP-10 (1) | MTHPA (1) | 120 |
| 8 | Epon 828 (1) | DMAPA (0.5) | PA (0.25) | 140 |

**TABLE 1 (Continued)**

| Sample No. | (a) Component (Number of equivalents) | (b) Component (Number of equivalents) | (c) Component (Number of equivalents) | Softening Temperature (°C) |
|---|---|---|---|---|
| 9 | Epon 828 (1) | DMAPA (0.75) | PA (0.5) | 90 |
| 10 | Epon 828 (1) | DMAPA (0.5) | MHHPA (0.25) | 100 |
| 11 | Epon 807 (1) | MZ (1) | MHHPA (1) | 120 |
| 12 | Epon 828 (1) | EMZ (1) | PA (0.5) | 110 |
| 13 | Epon 828 (1) | EMZ (1) | PA (1) | 110 |
| 14 | Epon 1001 (1) | EMZ (1.2) | PA (1.2) | 110 |
| 15 | Epon 828 (1) | EMZ (0.5) | MHHPA (0.5) | 130 |
| 16 | Epon 828 (1) | SMZ (0.5) | MHHPA (0.5) | 140 |

**TABLE 2**

| | Sample No. | Reactivity $T_i$(C) | Reactivity $T_p$(C) | Curing Temperature Time | Storage Stability (30°C) | a) Glass Transition Temperature (°C) |
|---|---|---|---|---|---|---|
| Example | 2 | 116 | 138 | 100°C 1 hour | >1 month | 98 |
| | 4 | 114 | 124 | 100°C 30 min. | >1 month | 90 |
| | 5 | 116 | 144 | 100°C 1 hour | >1 month | 113 |
| | 11 | 122 | 130 | 100°C 1 hour | >1 month | 109 |
| | 13 | 128 | 136 | 100°C 1 hour | >1 month | 114 |
| Control | DMP-30 | 60 | 110 | 100°C 30 min. | <1 day | 105 (b) |
| | DMAE | 55 | 101 | 100°C 30 min. | <1 day | 97 (b) |
| | PG-MZ | 60 | 120 | 100°C 30 min. | <1 day | 112 (b) |
| | EMZ | 114 | 120 | 120°C 30 min. | 2 days | 108 |

a) Cured at "Curing temperature time"

b) Cured at 100°C for 1 hour

TABLE 3

| EMZ[a)] (Number of equivalents) / MHHPA (Number of equivalents) | Softening Temperature (°C) | Curing Temperature Time | Storage Stability (40°C) | [b)] Glass Transition Temperature (°C) |
|---|---|---|---|---|
| 0.67/0.67 | 150 | 100°C 30 min. | >20 days | 85 |
| 1.0/1.0 | 120 | 100°C 30 min. | >20 days | 117 |
| 1.0/2.0 | 140 | 100°C 30 min. | >20 days | 97 |
| 1.0/2.5 | 120 | 100°C 30 min. | >20 days | 108 |

a) Number of equivalents of EMZ and MHHPA for 1 equivalent of epoxy group in Epon 834.

b) Cured at 100°C for 30 minutes.

**TABLE 4**

| Epoxy compound (Number of equivalents)<br>Amine compound (Number of equivalents) | Softening Temperature (°C) | a) Curing Temperature Time | a) Storage Stability (40°C) | b) Glass Transition Temperature (°C) |
|---|---|---|---|---|
| Epon 828 (1)<br>EMZ (0.67) | 100 | 100°C 1 hour | 14 days | 95 |
| Epon 834 (1)<br>EMZ (1) | 110 | 100°C 1 hour | 2 days | 115 |
| Epon 834 (1)<br>EMZ (0.67) | 130 | 100°C 1 hour | 20 days | 110 |
| Epon 828 (1)<br>PG-MZ (0.7) | 90 | 120°C 1 hour | 720 days | 86 |

a) Formulation shown in Example 3.

b) Cured at "Curing Temperature Time".

TABLE 5

| Sample | Reactivity $T_i$ (C) | Reactivity $T_p$ (C) | Curing Temperature Time | Storage Stability at 30°C | a) Glass Transition Temperature (°C) |
|---|---|---|---|---|---|
| 1 | 126 | 140 | 100°C 1 hour | >1 month | 100 |
| 2 | 100 | 124 | 100°C 30 min. | >1 month | 94 |
| 3 | 126 | 136 | 120°C 30 min. | >1 month | 117 |
| 4 | 110 | 123 | 100°C 30 min. | >1 month | 110 |
| 5 | 123 | 140 | 100°C 30 min. | >1 month | 110 |
| 6 | 114 | 132 | 100°C 30 min. | >1 month | 75 |
| 7 | 120 | 136 | 100°C 1 hour | >1 month | 110 |
| 8 | 114 | 143 | 140°C 30 min. | >1 month | 100 |
| 9 | 135 | 144 | 120°C 30 min. | >1 month | 100 |
| 10 | 110 | 128 | 100°C 1 hour | >1 month | 104 |

TABLE 5 (continued)

| Sample | Reactivity $T_i$(C) | Reactivity $T_p$(C) | Curing Temperature time | Storage Stability at 30°C | a) Glass Transition Temperature (°C) |
|---|---|---|---|---|---|
| 11 | 120 | 130 | 100°C 30 min. | >1 month | 110 |
| 12 | 116 | 128 | 100°C 30 min. | >1 month | 108 |
| 13 | 126 | 134 | 100°C 30 min. | >1 month | 107 |
| 14 | 110 | 126 | 100°C 30 min. | >1 month | 110 |
| 15 | 110 | 124 | 100°C 30 min. | >1 month | 104 |
| 16 | 146 | 166 | 140°C 1 hour | >1 month | 60 |

a) Cured at "Curing Temperature Time".

**TABLE 6**

| | Example | | | Control | | |
|---|---|---|---|---|---|---|
| Epon 828 | 100 | 100 | 100 | 100 | 100 | 100 |
| Sample No. 7 | 10 | 10 | 10 | - | - | - |
| dicyandiamide | 8 | | | 8 | | |
| melamine | | 10 | | | 10 | |
| benzoguanamine | | | 20 | | | 20 |
| Storage Stability (30°C) | >3months | >3months | >3months | >3months | >3months | >3months |
| Reactivity at 120°C, 1 hour | O | O | O | x | x | x |

**TABLE 7**

| | Sample No. | Reactivity $T_i$ (°C) | $T_p$ (°C) | Curing Temperature and Time | Storage Stability (30°C) | a) Glass Transition Temperature (°C) |
|---|---|---|---|---|---|---|
| Examples | 4 | 118 | 148 | 120°C 1 hour | 1 week | 130 |
| | 7 | 100 | 132 | 120°C 1 hour | 1 month | 135 |
| | 15 | 118 | 142 | 120°C 1 hour | 3 weeks | 135 |
| | 16 | 140 | 158 | 140°C 4 hours | >1 month | 98 |
| Control | DMP-30 | 60 | 120 | 120°C 30 min. | 1 day | 114 |
| | EMZ | 128 | 148 | 120°C 30 min. | 2 days | 118 |
| | SMZ | 106 | 124 | 120°C 30 min. | 1 day | 130 |

a) Cured at "Curing temperature and time"

CLAIMS

1. A latent curing agent for an epoxy resin, characterised in that the latent curing agent is an adduct obtained by reacting (a) polyfunctional epoxy compound, (b) a compound containing at least one active hydrogen atom and at least one tertiary amino group, and (c) a carboxylic acid anhydride.

2. A latent curing agent as claimed in claim 1, wherein the active hydrogen atom of component (b) is present as the group -OH, the group $-NH_2$, the group -NH or the group -SH.

3. A latent curing agent as claimed in claim 2, wherein component (b) is a compound having the general formula:

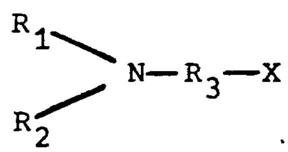

wherein X is the group -OH, the group $-NH_2$, the group -NH or the group -SH; wherein $R_1$ and $R_2$ are the same or different and each is a $C_1$ to $C_{20}$ alkyl group, a $C_2$ to $C_{20}$ alkenyl group or an aromatic group (which alkyl, alkenyl or aromatic groups optionally contain one or more substituents such as -O-, =O, -halogen, -OH, $-NH_2$, -NH and -SH); wherein $R_3$ is a $C_1$ to $C_{20}$ alkylene group, a $C_2$ to $C_{20}$ alkenylene group or a divalent aromatic group (which alkylene, alkenylene or aromatic groups optionally contain one or more substituents such as -O-, =O, -halogen, -OH, $-NH_2$, -NH and -SH); wherein, in the alternative, $R_1$ and $R_2$ are connected together to form a divalent hydrocarbyl group (optionally containing one or more substituents such as -O-, =O, -halogen, -OH, $-NH_2$, -NH and -SH); wherein, in the alternative, $R_1$ and $R_2$ and $R_3$ are connected together to form a quadruvalent hydrocarbyl group (optionally containing one or more substituents such as -O-, =O, -halogen, -OH, $-NH_2$, -NH and -SH).

4. A latent curing agent as claimed in claim 2, wherein component (b) is a compound having the general formula:

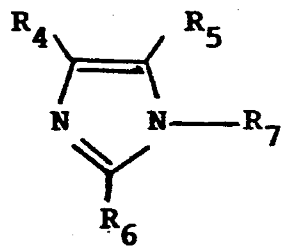

wherein $R_4$, $R_5$, $R_6$ and $R_7$ are the same or different and each is a hydrogen atom, the group -OH, the group $-NH_2$, the group -NH, the group -SH, a $C_1$ to $C_{20}$ alkyl group, a $C_2$ to $C_{20}$ alkenyl group or an aromatic group (which alkyl, alkenyl or aromatic groups optionally contain one or more substituents such as -O-, =O, -halogen, -OH, $-NH_2$, -NH and -SH); wherein, in the alternative, any two of $R_4$, $R_5$, $R_6$ and $R_7$ are connected together to form a divalent hydrocarbyl group (optionally containing one or more substituents such as -O-, =O, -halogen, -OH, $-NH_2$, -NH and -SH); wherein, in the alternative, any three of $R_4$, $R_5$, $R_6$ and $R_7$ are connected together to form a trivalent hydrocarbyl group (optionally containing one or more substituents such as -O-, =O, -halogen, -OH, $-NH_2$, -NH and -SH).

5. A latent curing agent as claimed in any of claims 1 to 4, wherein component (a) is a polyglycidyl ether preferably obtained by reacting a polyhydric phenol or a polyhydric alcohol with epichlorohydrin; a glycidyl ether ester preferably obtained by reacting a hydroxycarboxylic acid with epichlorohydrin; a polyglycidyl ester obtained from a polycarboxylic acid; a glycidylamine compound obtained from 4,4'-diaminodiphenylmethane and m-aminophenol; an epoxidized novolak; or an epoxidized polyolefin.

6. A latent curing agent as claimed in any of claims 1 to 5, wherein component (c) is succinic

anhydride, phthalic anhydride, tetrahydro phthalic anhydride, methyl tetrahydro phthalic anhydride, hexahydro phthalic anhydride, methyl hexahydro phthalic anhydride, methyl nadic anhydride, dodecenylsuccinic anhydride, pyromellitic dianhydride, or 5-(2,5-diketotetrahydrofuryl)-3-methyl-3-cyclohexene-1,2-dicarboxylic anhydride.

7. A latent curing agent as claimed in any of claims 1 to 6, wherein component (b) is used in an amount of from 0.4 to 2 equivalents of active hydrogen per 1 equivalent of epoxy group in component (a), and wherein component (c) is used in an amount of from 0.25 to 2.5 equivalents per 1 equivalent of epoxy group in component (a).

8. A latent curing agent as claimed in any of claims 1 to 7, obtained by mixing components (a), (b) and (c), gelling the mixture, allowing the mixture to react at a temperature of from 80 to 150°C, cooling the mixture and allowing it to solidify, and crushing the solidified mixture.

9. A curable composition comprising (i) an epoxy resin containing two or more epoxy groups, and (ii) a latent curing agent as claimed in any of claims 1 to 8.

10. A cured composition comprising (i) an epoxy resin containing two or more epoxy groups, and (ii) a latent curing agent as claimed in any of claims 1 to 8.